# EUROPÄISCHE PATENTSCHRIFT

(11) **EP 2 825 908 B1**
(45) Veröffentlichungstag und Bekanntmachung des Hinweises auf die Patenterteilung: **30.05.2018**
(21) Anmeldenummer: 13708736.7
(22) Anmeldetag: 27.02.2013
(51) Int. Cl.: G02B 6/06, G02B 6/08, G02B 21/00, G02B 21/36, G02B 27/58

(54) **HOCHAUFLÖSENDE SCANNING-MIKROSKOPIE**
HIGH-RESOLUTION SCANNING MICROSCOPY
MICROSCOPIE À BALAYAGE À HAUTE RÉSOLUTION

(30) Priorität: 15.03.2012 DE 102012204128
(43) Veröffentlichungstag der Anmeldung: 21.01.2015
(73) Patentinhaber: Carl Zeiss Microscopy GmbH, 07745 Jena (DE)
(72) Erfinder: KLEPPE, Ingo, 07749 Jena (DE); NETZ, Ralf, 07745 Jena (DE); NIETEN, Christoph, 07745 Jena (DE); WOLLESCHENSKY, Ralf, 07743 Jena (DE)
(74) Vertreter: Hampe, Holger
(86) Internationale Anmeldenummer: PCT/EP2013/053980
(87) Internationale Veröffentlichungsnummer: WO 2013/135487

(56) Entgegenhaltungen:
- EP-A1- 2 317 362
- CN-A- 101 210 969
- JP-A- 59 214 818
- JP-A- 62 218 823

## Beschreibung

Die Erfindung bezieht sich auf ein Mikroskop zur hochauflösenden Scanning-Mikroskopie einer Probe, mit einer Beleuchtungseinrichtung zum Beleuchten der Probe, einer Abbildungseinrichtung zum Scannen eines Punkt- oder Linien-Spots über die Probe und zum Abbilden des Punkt- oder Linien-Spots in ein beugungsbegrenztes, ruhendes Einzelbild unter einem Abbildungsmaßstab in eine Detektionsebene, einer Detektoreinrichtung zum Erfassen des Einzelbildes in der Detektionsebene für verschiedene Scanpositionen mit einer Ortauflösung, welche unter Berücksichtigung des Abbildungsmaßstabes mindestens doppelt so groß ist wie eine Halbwertsbreite des beugungsbegrenzten Einzelbildes, einer Auswerteeinrichtung zum Auswerten einer Beugungsstruktur des Einzelbildes für die Scanpositionen aus Daten der Detektoreinrichtung und zum Erzeugen eines Bildes der Probe, das eine Auflösung aufweist, die über die Beugungsgrenze gesteigert ist. Die Erfindung bezieht sich weiter auf ein Verfahren zur hochauflösenden Scanning-Mikroskopie einer Probe, bei dem die Probe beleuchtet wird, ein scannend über die Probe geführter Punkt- oder Linien-Spot in ein Einzelbild abgebildet wird, wobei der Spot unter einem Abbildungsmaßstab beugungsbegrenzt in das Einzelbild abgebildet wird und das Einzelbild ruhend in einer Detektionsebene liegt, für verschiedene Scanpositionen das Einzelbild mit einer Ortauflösung erfasst wird, welche unter Berücksichtigung des Abbildungsmaßstabes mindestens doppelt so groß ist wie eine Halbwertsbreite des beugungsbegrenzten Einzelbildes, so dass eine Beugungsstruktur des Einzelbildes erfasst wird, für jede Scanposition die Beugungsstruktur des Einzelbildes ausgewertet wird und ein Bild der Probe erzeugt wird, das eine Auflösung aufweist, die über die Beugungsgrenze gesteigert ist.

Ein solches Mikroskop bzw. Mikroskopieverfahren ist beispielsweise aus der Veröffentlichung C. Müller und J. Enderlein, Physical Review Letters, 104, 198101 (2010), oder der EP 2317362 A1 bekannt, die auch weitere Nachweise zum Stand der Technik aufführt.

Die JP 59214818 A beschreibt ein nicht-abbildendes Umverteilungselement, das Strahlung nichtabbildend auf Pixel eines Detektorarrays verteilt. Ähnliche Umverteilungselemente sind auch aus der CN 101210969 A sowie JP 62218823 A bekannt.

Dieser Ansatz erreicht eine Auflösungserhöhung, indem ein Spot beugungsbegrenzt auf eine Detektionsebene abgebildet wird. Die beugungsbegrenzte Abbildung bildet einen Punkt-Spot als Airy-Scheibe ab. Diese Beugungsscheibe wird in der Detektionsebene so erfasst, dass ihre Struktur aufgelöst werden kann. Bezogen auf die Abbildungsleistung des Mikroskops erfolgt somit detektorseitig eine Überabtastung. Bei der Abbildung eines Punkt-Spots wird die Form der Airy-Scheibe aufgelöst. Durch geeignete Auswertung der Beugungsstruktur, die in den genannten Schriften geschildert ist und deren Offenbarung diesbezüglich vollumfänglich hier einbezogen sei, erreicht man eine Auflösungssteigerung um den Faktor 2 über die Beugungsgrenze.

Detektionsseitig ist es dabei jedoch unvermeidlich, dass für jeden Punkt, der auf der Probe in dieser Weise abgetastet wird, verglichen mit einem herkömmlichen Laser-Scanning-Mikroskop (nachfolgend auch als LSM abgekürzt) ein Einzelbild mit einem Vielfachen an Bildinformation aufgenommen werden muss. Erfasst man die Struktur des Einzelbildes des Spots beispielsweise mit 16 Pixeln, hat man pro Spot nicht nur die 16-fache Datenmenge, ein einzelnes Pixel enthält auch im Mittel nur ein 1/16 der Strahlungsintensität, die bei einer üblichen Pinhole-Detektion auf den Detektor eines LSM fallen würde. Da die Strahlungsintensität über die Struktur des Einzelbildes, beispielsweise die Airy-Scheibe, natürlich nicht gleichmäßig verteilt ist, fällt am Rande dieser Struktur tatsächlich sogar noch bedeutend weniger Strahlungsintensität an, als der Mittelwert von 1/n bei n-Pixeln.

Man steht also vor der Aufgabe, detektorseitig Strahlungsmengen hochauflösend erfassen zu können. Herkömmliche CCD-Arrays, die üblicherweise in der Mikroskopie eingesetzt werden, erreichen kein hinreichendes Signal/Rausch-Verhältnis, so dass selbst eine Verlängerung der Bildaufnahmedauer, die per se schon als nachteilig in der Anwendung wäre, nicht weiterhelfen würde. APD-Arrays sind auch mit einem zu hohen Dunkelrauschen behaftet, so dass auch eine Verlängerung der Messdauer in einem unzureichenden Signal/Rausch-Verhältnis resultieren würde. Gleiches gilt für CMOS-Detektoren, die zudem hinsichtlich der Detektorelementgröße nachteilig sind, da das beugungsbegrenzte Einzelbild des Spots auf zu wenige Pixel fallen würde. Ähnliche Bauraumprobleme bringen PMT-Arrays mit sich; die Pixel sind dort ebenfalls zu groß. Die Bauraumprobleme ruhen insbesondere daher, dass eine Realisierung eines Mikroskops zur Hochauflösung vom Entwicklungsaufwand wie von der Geräteverbreitung nur realisierbar ist, wenn eine Integration in bestehende LSM-Konstruktionen möglich ist. Hier sind jedoch bestimmte Größen des Einzelbildes vorgegeben. Ein flächenmäßig größerer Detektor könnte nur dann eingebracht werden, wenn zusätzlich eine Optik vorgesehen wird, die das Bild noch einmal signifikant, d. h. um mehrere Größenordnungen aufweitet. Eine solche Optik gestaltet sich, will man die beugungsbegrenzte Struktur ohne weitere Abbildungsfehler erhalten, als sehr aufwendig.

Es sind im Stand der Technik andere Verfahren bekannt, welche die geschilderten detektionsseitigen Probleme bei der Hochauflösung vermeiden. So ist beispielsweise in der EP 1157297 B1 ein Verfahren angesprochen, bei dem mittels strukturierter Beleuchtung nicht linearer Prozesse ausgenützt werden. Eine strukturierte Beleuchtung wird in mehreren Dreh- und Ortslagen über die Probe verschoben und die Probe in diesen unterschiedlichen Zuständen auf einen Weitfelddetektor abgebildet, für den die geschilderten Beschränkungen nicht bestehen.

Ein Verfahren, das ohne die geschilderten Detektoreinschränkungen ebenfalls eine Hochauflösung (also eine Auflösung eines Probenbildes jenseits der Beugungsgrenze) erreicht, ist aus der WO 2006127692 und der DE 102006021317 bekannt. Dieses mit PALM abgekürzte Verfahren verwendet eine Markierungssubstanz, welche mittels eines optischen Aktivierungssignals aktiviert werden kann. Nur im aktivierten Zustand kann die Markierungssubstanz mit Anregungsstrahlung zur Abgabe von bestimmter Fluoreszenzstrahlung angeregt werden; nicht aktivierte Moleküle senden auch nach Einstrahlung von Anregungsstrahlung keine Fluoreszenzstrahlung aus. Die Aktivierungsstrahlung schaltet die Aktivierungssubstanz also in einen Zustand, in dem sie zur Fluoreszenz anregbar ist. Man spricht deshalb allgemein von einem Umschaltsignal. Dieses wird nun so aufgebracht, dass zumindest ein gewisser Anteil der aktivierten Markierungsmoleküle von benachbarten, ebenfalls aktivierten Markierungsmolekülen so beabstandet ist, dass die aktivierten Markierungsmoleküle gemessen an der optischen Auflösung der Mikroskopie getrennt oder nachträglich trennbar sind. Man spricht von Isolierung der aktivierten Moleküle. Für diese isolierten Moleküle ist es einfach, das Zentrum deren auflösungsbegrenzt bedingter Strahlungsverteilung zu ermitteln und somit rechnerisch die Lage der Moleküle mit höherer Genauigkeit zu bestimmen, als es die optische Abbildung eigentlich zulässt. Zum Abbilden der gesamten Probe benutzt das PALM-Verfahren die Tatsache, dass die Wahrscheinlichkeit, mit der ein Markierungsmolekül durch das Umschaltsignal bei gegebener Intensität des Umschaltsignals aktiviert wird, für alle Markierungsmoleküle gleich ist. Die Intensität des Umschaltsignals wird also so aufgebracht, dass die gewünschte Isolierung erfolgt. Diese Verfahrensschritte werden so lange wiederholt, bis möglichst alle Markierungsmoleküle einmal in einer Teilmenge, die zur Fluoreszenz angeregt wurde, enthalten waren.

Der Erfindung liegt deshalb die Aufgabe zugrunde, ein Mikroskop bzw. ein Mikroskopieverfahren anzugeben, mit dem ebenfalls eine Hochauflösung erreicht werden kann. Insbesondere soll eine schnelle Bildgewinnung bei der hochauflösenden Mikroskopie möglich werden.

Die Erfindung löst diese Aufgabe mit einem Mikroskop gemäß Anspruch 1. Die Detektoreinrichtung auf ein Detektorarray, das Pixel aufweist und größer ist als das Einzelbild, und ein nicht-abbildendes Umverteilungselement, das dem Detektorarray vorgeordnet ist und die Strahlung aus der Detektionsebene nicht-abbildend auf die Pixel des Detektorarrays verteilt.

Die Erfindung löst die Aufgabe mit einem Verfahren gemäß Anspruch 8. Es wird ein Detektorarray bereitgestellt, das Pixel aufweist und größer ist als das Einzelbild, und Strahlung des Einzelbildes aus der Detektionsebene nicht-abbildend auf die Pixel des Detektorarrays umverteilt wird.

Die Detektionsebene ist konjugiert zur Ebene des Spots in der Probe und entspricht der Pinhole-Ebene eines normalen LSM.

Im Rahmen der Erfindung wird der auf der Probe abgetastete Spot ruhend in eine Detektionsebene abgebildet. Die Strahlung aus der Detektionsebene wird dann nicht-abbildend umverteilt und auf das Detektorarray geleitet. Der Begriff "nicht-abbildend" ist dabei auf das in der Detektionsebene vorhandene Einzelbild bezogen. Einzelne Flächenbereiche dieses Einzelbildes können natürlich dennoch gemäß den Abbildungsgesetzen abgebildet werden. Insofern kann zwischen Detektorarray und Umverteilungselement durchaus abbildende Optik liegen. Das in der Detektionsebene vorliegende Einzelbild bleibt jedoch bei der Umverteilung als solches nicht erhalten.

Der Begriff "beugungsbegrenzt" soll nicht auf die Beugungsgrenze gemäß der Abbe'schen Theorie beschränkt sein, sondern auch Fälle erfassen, in denen auf Grund realer Unzulänglichkeiten oder Einschränkungen das theoretische Maximum um 20 % verfehlt wird. Auch dann hat das Einzelbild eine Struktur, die hier als Beugungsstruktur bezeichnet wird. Sie wird überabgetastet.

Dieses Prinzip verwendet ein Detektorarray, das in seiner Größe nicht zum Einzelbild passt. Das Detektorarray ist in mind. einer Ausdehnung größer oder kleiner als das zu erfassende Einzelbild. Unter den Begriff der unterschiedlichen geometrischen Ausbildung fallen sowohl eine unterschiedliche Ausdehnung des Detektorarrays als auch eine Anordnung mit unterschiedlichen Aspektverhältnis bezogen auf Höhe und Breite der Ausdehnung des Einzelbildes in der Detektionsebene. Die Pixel des Detektorarrays sind für die erforderliche Auflösung zu groß. Auch ist es nun zulässig, dass der Umriss der Pixelanordnung des Detektorarrays grundlegend anders ist, als der Umriss, den das Einzelbild in der Detektionsebene hat. Letztlich hat das Detektorarray erfindungsgemäß eine andere Größe als das Einzelbild in der Detektionsebene. Die Umverteilung im Verfahren bzw. das Umverteilungselement im Mikroskop ermöglichen es, ein Detektorarray zu wählen, ohne die Abmessungseinschränkungen und Pixelgrößeneinschränkungen beachten zu müssen, welche durch das Einzelbild und dessen Größe entstehen. Insbesondere kann als Detektorarray eine Detektorzeile verwendet werden.

Das Bild der Probe entsteht LSM-üblich durch Abtasten der Probe mit dem Spot aus einer Vielzahl von Einzelbildern, die jeweils einem anderen Abtastort, also einer anderen Scanposition, zugeordnet sind.

Das erfindungsgemäße Konzept kann auch in parallelisierter Form für mehrere Spots gleichzeitig durchgeführt werden, wie dies für die Laserscanningmikroskopie bekannt ist. Es werden dann mehrere Spots auf der Probe scannend abgetastet, und die Einzelbilder der mehreren Spots liegen ruhend in der Detektionsebene nebeneinander. Sie werden dann entweder von einem gemeinsamen Umverteilungselement, das flächenmäßig entsprechend groß ist bzw. von mehreren einzelnen Umverteilungselementen umverteilt und dann auf ein entsprechend größeres einzelnes oder mehrere einzelne Detektorarrays geleitet.

Die nachfolgende Beschreibung konzentriert sich exemplarisch auf die Abtastung mit einem einzelnen Punkt-Spot. Dies soll jedoch nicht als Einschränkung verstanden werden, und die erläuterten Merkmale und Grundsätze gelten sinngemäß auch für die parallel Abtastung mehrerer Punkt-Spots wie auch für die Verwendung eines Linienspots. Letzterer ist natürlich nur quer zur Linienerstreckung beugungsbegrenzt, so dass die diesbezüglichen Merkmale dieser Beschreibung dann nur in einer Richtung (quer zur Linienerstreckung) gelten.

Durch das erfindungsgemäße Vorgehen kann das ISM-Verfahren bei zufriedenstellender Geschwindigkeit und mit vertretbarem apparativen Aufwand ausgeführt werden. Die Erfindung eröffnet für ein hochauflösendes Mikroskopieprinzip ein breites Anwendungsfeld, das so bislang nicht gegeben war.

Eine Möglichkeit der Umverteilung bzw. das Umverteilungselement zu realisieren besteht darin, ein Bündel aus Lichtleitfasern zu verwenden. Diese können vorzugsweise als Multimode-Lichtleitfasern ausgeführt werden. Das Bündel hat einen Eingang, der in der Detektionsebene angeordnet ist und in seinem Umriss den Ausdehnungen des beugungsbegrenzten Einzelbildes in der Detektionsebene genügt. Am Ausgang sind die Lichtleitfasern hingegen in der geometrischen Anordnung angeordnet, welche durch das Detektorarray vorgegeben ist, und welche sich von der des Eingangs unterscheidet. Die ausgangsseitigen Enden der Lichtleitfasern können dabei direkt auf die Pixel des Detektorarrays geführt werden. Besonders vorteilhaft ist es, wenn der Ausgang des Bündels in einem Stecker zusammengefasst ist, der bequem auf eine Detektorzeile, beispielsweise eine APD- oder PMT-Zeile aufgesteckt werden kann.

Für das Verständnis der Erfindung ist es wichtig, zwischen den Pixeln des Detektorarrays und Bildpixeln zu unterscheiden, mit denen das Einzelbild in der Detektionsebene aufgelöst wird. Jedes Bildpixel ist i. d. R. genau einem Pixel des Detektorarrays zugeordnet; hinsichtlich ihrer Anordnung sind die beiden aber unterschiedlich. Kennzeichnend für die Erfindung ist es unter anderem, dass in der Detektionsebene die Strahlung an Bildpixeln aufgenommen wird, welche hinsichtlich ihrer Größe und Anordnung eine Überabtastung des Einzelbildes bewirken. Auf diese Weise wird die Struktur des Einzelbildes aufgelöst, die aufgrund der beugungsbegrenzten Erzeugung des Einzelbildes eine Beugungsstruktur ist. Das Umverteilungselement hat eine Eingangsseite, an der diese Bildpixel vorgesehen sind. Die Eingangsseite liegt in der Detektionsebene. Das Umverteilungselement leitet die Strahlung an jedem Bildpixel zu einem der Pixel des Detektorarrays. Die Zuordnung von Bildpixeln zu Pixeln des Detektorarrays hält die Bildstruktur nicht aufrecht, weshalb die Umverteilung bezogen auf das Einzelbild nichtabbildend ist. Die Erfindung könnte also auch dadurch charakterisiert werden, dass in einem gattungsgemäßen Mikroskop die Detektoreinrichtung ein nicht-abbildendes Umverteilungselement aufweist, das eine in der Detektionsebene liegende Eingangsseite aufweist, an der die Strahlung mit Bildpixeln aufgenommen wird. Das Umverteilungselement weist weiter eine Ausgangsseite auf, an der die an den Bildpixeln aufgenommene Strahlung Pixeln eines Detektorarrays zugeführt wird, wobei die Strahlung von der Eingangsseite zur Ausgangsseite bezogen auf das Einzelbild nicht-abbildend umverteilt ist. Analog könnte das erfindungsgemäße Verfahren dadurch charakterisiert werden, dass bei einem gattungsgemäßen Verfahren die Strahlung in der Detektionsebene mit Bildpixeln aufgenommen wird, die bezogen auf das Einzelbild nicht-abbildend auf Pixel des Detektorarrays umverteilt werden. Das Detektorarrays unterscheidet sich hinsichtlich Anordnung und/Größe seiner Pixel von der Anordnung und/oder Größe der Bildpixel in der Detektionsebene. Weiter sind die Bildpixel in der Detektionsebene vom Umverteilungselement so bereitgestellt, dass bezogen auf die Beugungsgrenze die Beugungsstruktur des Einzelbildes überabgetastet ist.

Bei hochempfindlichen Detektorarrays ist es bekannt, dass benachbarte Pixel bei hohen Strahlungsintensitätsunterschieden eine Störung durch Übersprechen zeigt. Um solches zu vermeiden, ist eine Weiterbildung bevorzugt, bei der die Lichtleitfasern so vom Eingang zum Ausgang geführt sind, dass am Ausgang benachbarte Lichtleitfasern auch am Eingang benachbart sind. Da das beugungsbegrenzte Einzelbild keine sprungartigen Strahlungsintensitätsänderungen zeigt, stellt eine derartige Ausgestaltung des Umverteilungselementes automatisch sicher, dass nebeneinanderliegende Pixel des Detektorarrays möglichst geringe Strahlungsintensitätsunterschiede erhalten, was das Übersprechen minimiert.

Anstelle einer auf Lichtleitfasern basierten Umverteilung ist es auch möglich, das Umverteilungselement mit einem Spiegel auszurüsten, der unterschiedlich geneigte Spiegelelemente hat. Ein solcher Spiegel kann beispielsweise als Facettenspiegel, DMD oder adaptiver Spiegel ausgestaltet werden, wobei bei den letzten beiden Varianten eine entsprechende Einstellung bzw. Ansteuerung die Neigung der Spiegelelemente sicherstellt. Die Spiegelelemente leiten die Strahlung aus der Detektionsebene auf die Pixel des Detektorarrays, dessen geometrische Ausbildung sich von der der Spiegelelemente unterscheidet.

Die Spiegelelemente stellen wie die Lichtleitfaserenden im Eingang des Lichtleitfaserbündels die Bildpixel hinsichtlich der Auflösung der Beugungsstruktur des Einzelbildes dar. Ihre Größe ist für die Übertastung entscheidend, nicht (mehr) die Pixelgröße des Detektorarrays. Insofern wird hier auch eine Gruppe aus mehreren Einzeldetektoren als Detektorarray verstanden, da diese in ihrer Anordnung immer anders (also größer) als die Bildpixel in der Detektionsebene sind.

Bei LSM werden je nach erwünschter Auflösung unterschiedliche Objektive verwendet. Der Wechsel eines Objektivs verändert die Ausdehnung eines Einzelbildes in der Detektionsebene. Es ist deshalb bevorzugt, der Detektionsebene in Abbildungsrichtung eine Zoomoptik zur Anpassung der Größe des Einzelbildes an die der Detektoreinrichtung vorzuordnen. Eine solche Zoomoptik variiert die Größe des Einzelbildes in einem Prozentbereich deutlich kleiner 100 %, ist also sehr viel einfacher auszuführen, als eine Vervielfachung der Größe des Einzelbildes, die eingangs als nachteilig geschildert wurde.

Die Beleuchtung der Probe erfolgt bevorzugt wie in einem üblichen LSM ebenfalls scannend, obwohl dies nicht zwingend ist. Man erreicht dann allerdings die maximale Auflösungssteigerung. Beleuchtet man die Probe scannend, ist es zweckmäßig, dass die Beleuchtungseinrichtung und die Abbildungseinrichtung eine gemeinsame Scaneinrichtung haben, welche einen Beleuchtungsspot über die Probe führt und zugleich den mit dem Beleuchtungsspot zusammenfallenden Spot, an dem die Probe abgebildet wird, in Bezug auf den Detektor wieder descannt, so dass das Einzelbild ruhend in der Detektionsebene ist. Bei einem solchen Aufbau kann man die Zoomoptik in dem gemeinsamen Teil von Beleuchtungs- und Abbildungseinrichtung setzen. Sie erlaubt es dann nicht nur, die Anpassung des Einzelbildes an die Größe des Detektors in der Detektionsebene vorzunehmen, sondern erlaubt auch zusätzlich die verfügbare Beleuchtungsstrahlung ohne Randverluste vollständig in die Objektivpupille, welche sich mit Wahl des Objektives ändern kann, einzukoppeln.

Ein strahlungsintensitätabhängiges Übersprechen zwischen nebeneinanderliegenden Pixeln des Detektorarrays kann, wie bereits eingangs erwähnt, bei Umverteilung mittels Lichtleitfaserbündel durch geeignete Anordnung der Lichtleitfasern im Bündel reduziert werden. Zusätzlich oder alternativ ist es auch möglich, eine Kalibrierung durchzuführen. Dazu wird jede Lichtleitfaser nacheinander mit Strahlung beaufschlagt und das Störsignal in benachbarten Pixeln erfasst. Auf diese Weise wird eine Kalibriermatrix aufgestellt, mit der bei der späteren Mikroskopie der Probe ein strahlungsintensitätsabhängiges Übersprechen nebeneinanderliegender Pixel korrigiert wird.

Die Auflösung der Beugungsstruktur des Einzelbildes erlaubt es zusätzlich, eine Bewegungsrichtung des Spots zu ermitteln, entlang dieser während des Abtastens der Probe verschoben wird. Diese Bewegungsrichtung ist zwar grundsätzlich aus der Mechanik des Scanners (beispielsweise eines Scanspiegels oder eines beweglichen Probentisches) bekannt, jedoch ergeben sich hier mechanisch bedingte Restungenauigkeiten. Diese können eliminiert werden, indem Signale einzelner Pixel des Detektorarrays mittels Kreuzkorrelation ausgewertet werden. Dabei macht man sich zunutze, dass sich, bezogen nebeneinanderliegende Bildpixel in der Probe aufgrund der beugungsbegrenzten Abbildung des Spots in einem gewissen Maß überlappen, ihre Zentren jedoch nebeneinander liegen. Unterzieht man die Signale solcher Bildpixel einer Kreuzkorrelation, kann man eine Restungenauigkeit, welche aufgrund unvermeidlicher Toleranzen der Scanmechanik verbleibt, reduzieren bzw. vollständig eliminieren.

Neben der erhöhten Auflösung lässt sich über die räumliche und zeitliche Korrelation der Signale aus einer Messreihe der einzelnen Detektorelemente (die Bildpixeln in der Detektionsebene zugeordnet sind) eine zeitliche Veränderung der Fluoreszenz im vom Spot erfassten Detektionsvolumen erfassen, z. B. können aus einer zeitlichen Korrelation wie bei der Fluoreszenzkorrelationsspektroskopie Diffusionskoeffizienten bestimmt werden und auch durch das Einbeziehen der räumlichen Korrelation zwischen Bildpixeln gerichtete Diffusion und Diffusionsbarrieren visualisiert werden. Bewegungsabläufe der Fluoreszenzmoleküle sind darüber hinaus auch für Trackinganwendungen von großem Interesse, da dort der Beleuchtungsspot der Bewegung der Fluoreszenzmoleküle folgen soll. Die hier beschriebene Anordnung erlaubt es hochgenau die Bewegungsrichtung schon innerhalb einer Pixelbeichtungszeit zu ermitteln. Es ist deshalb als Weiterbildung bevorzugt, dass Veränderungen in der Probe erfasst werden, indem bei in der Probe ruhendem Punkt- oder Linien-Spot eine zeitliche Veränderung des beugungsbegrenzten Einzelbildes ermittelt und ausgewertet wird.

Das erfindungsgemäße Vorgehen ermöglicht weiter bei gescannter Beleuchtung die Beleuchtungsverteilung zu modifizieren, beispielsweise mittels eines Phasenfilters. Kann damit sehr einfach das Verfahren realisiert werden, wie es beschrieben ist in Gong et al., Opt. Let., 34, 3508 (2009).

Soweit hier ein Verfahren beschrieben wird, realisiert ein Steuergerät diese Verfahrensschritte im Betrieb des Mikroskops.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung eines Laser-Scanning-Mikroskops zur hochauflösenden Mikroskopie,
- Fig. 2: eine vergrößerte Darstellung einer Detektoreinrichtung des Mikroskops der Fig. 1;
- Fig. 3 und 4: Draufsichten auf mögliche Ausführungsformen der Detektoreinrichtung 19 in einer Detektionsebene,
- Fig. 5: eine Weiterbildung des Mikroskops der Fig. 1 durch eine Zoom-Optik zur Anpassung der Größe des Detektorfelde,
- Fig. 6: eine Abwandlung des Mikroskops der Fig. 5 hinsichtlich der Zoom-Optik sowie hinsichtlich einer Weiterbildung zur mehrfarbigen Abbildung,
- Fig. 7: eine Abwandlung des Mikroskops der Fig. 1, wobei die Abwandlung die Detektoreinrichtung betrifft, und
- Fig. 8: eine Abwandlung der Detektoreinrichtung 19 der Fig. 7.

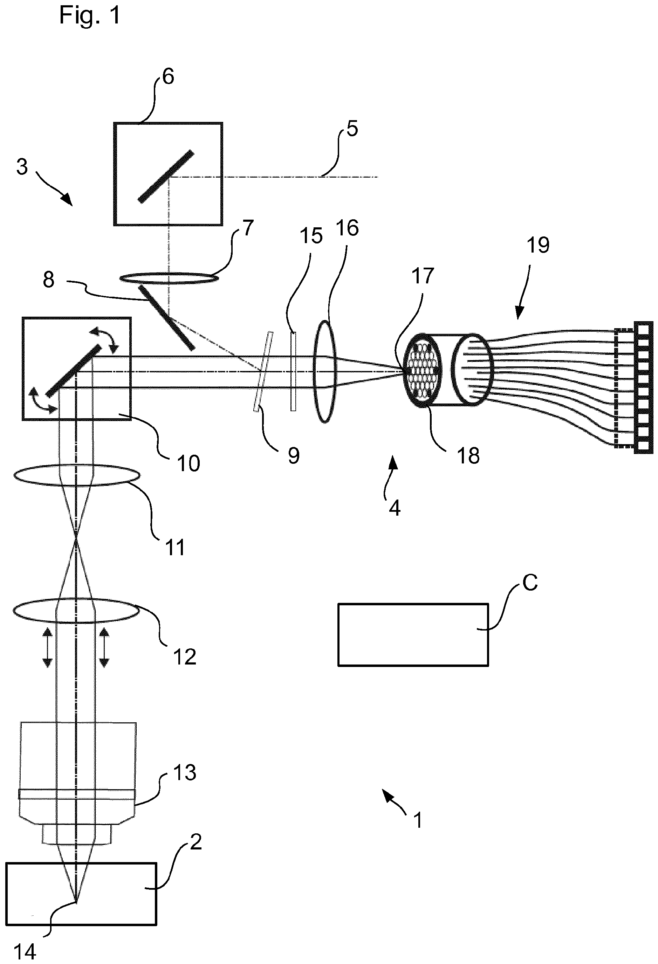

Fig. 1 zeigt schematisch ein Laserscanningmikroskop 1, das zum Mikroskopieren einer Probe 2 ausgebildet ist. Das Laserscanningmikroskop (nachfolgend als LSM abgekürzt) 1 wird von einem Steuergerät C gesteuert und umfasst einen Beleuchtungsstrahlengang 3 sowie einen Abbildungsstrahlengang 4. Der Beleuchtungsstrahlengang beleuchtet einen Spot in der Probe 2, und der Abbildungsstrahlengang 4 bildet diesen Spot beugungsbegrenzt zur Detektion ab.

Beleuchtungsstrahlengang 3 und Abbildungsstrahlengang 4 teilen sich eine Vielzahl von Elementen. Dies ist aber ebenso wenig zwingend, wie eine gescannte Spot-Beleuchtung der Probe 2. Diese könnte auch weitfeldbeleuchtet werden.

Die Beleuchtung der Probe 2 erfolgt im LSM 1 mittels eines bereitgestellten Laserstrahls 5, der über einen nicht weiter funktionell erforderlichen Umlenkspiegel 6 und eine Linse 7 auf einen Spiegel 8 eingekoppelt wird. Der Spiegel 8 sorgt dafür, dass der Laserstrahl 5 unter einem Reflexionswinkel auf einen Emissionsfilter 9 fällt. Zur übersichtlicheren Darstellung ist für den Laserstrahl 5 lediglich dessen Hauptachse eingezeichnet.

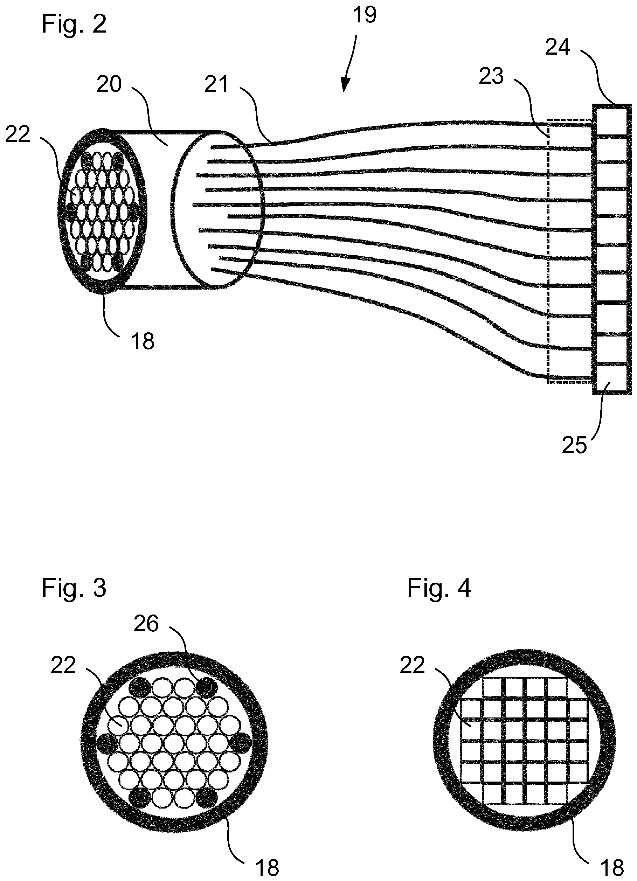

Nach Reflexion am Emissionsfilter 9 wird der Laserstrahl 5 von einem Scanner 10 zweiachsig abgelenkt und mittels Linsen 11 und 12 durch ein Objektiv 13 in einen Spot 14 in der Probe 2 fokussiert. Der Spot ist dabei in der Darstellung der Fig. 1 punktförmig, es ist jedoch auch ein linienförmiger Spot möglich. Im Spot 14 angeregte Fluoreszenzstrahlung wird über das Objektiv 13, die Linsen 11 und 12 wieder zum Scanner 10 gelangt, nachdem in Abbildungsrichtung wiederum ein ruhender Lichtstrahl vorliegt. Dieser fällt durch die Emissionsfilter 9 und 15, welche die Funktion haben, die Fluoreszenzstrahlung im Spot 14 hinsichtlich ihrer Wellenlänge zu selektieren und insbesondere von der Beleuchtungsstrahlung des Laserstrahls 5, die beispielsweise als Anregungsstrahlung dienen kann, zu trennen. Eine Linse 16 sorgt dafür, dass insgesamt der Spot 14 in ein beugungsbegrenztes Bild 17 abgebildet wird, welches in einer Detektionsebene 18 liegt. Die Detektionsebene 18 ist eine konjugierte Ebene zur Ebene, in welcher der Spot 14 in der Probe 2 liegt. Das Bild 17 des Spots 14 wird in der Detektionsebene 18 von einer Detektoreinrichtung 19 aufgenommen, die nachfolgend anhand der Figuren 2 bis 4 näher erläutert wird. Wesentlich ist hier, dass die Detektoreinrichtung 19 das beugungsbegrenzte Bild 17 des Spots 14 in der Detektionsebene 18 räumlich auflöst.

Das Steuergerät C steuert alle Komponenten des LSM 1, insbesondere Scanner 10 und Detektoreinrichtung 19. Das Steuergerät nimmt für verschiedene Scanstellungen die Daten jedes einzelnen Bildes 17 auf, analysiert dessen Beugungsstruktur und erzeugt ein hochaufgelöstes Gesamtbild der Probe 2.

Das LSM 1 der Fig. 1 ist exemplarisch für einen einzigen Spot, der auf der Probe abgetastet wird, dargestellt. Es kann jedoch zugleich auch zur Abtastung gemäß einem Linien-Spot verwendet werden, der sich beispielsweise senkrecht zur Zeichnungsebene der Fig. 1 erstreckt. Auch ist es möglich, das LSM 1 der Fig. 1 so auszuführen, dass mehrere nebeneinanderliegende Punkt-Spots in der Probe abgetastet werden. Ihre entsprechenden Einzelbilder 17 liegen dann in der Detektionsebene 18 ebenfalls nebeneinander. Die Detektoreinrichtung 19 ist dann entsprechend ausgestaltet, um die nebeneinanderliegenden Einzelbilder 17 in der Detektionsebene 18 zu erfassen.

Die Detektoreinrichtung 19 ist vergrößert in Fig. 2 dargestellt. Sie besteht aus einem Lichtleitfaserbündel 20, welches ein Detektorarray 24 speist. Das Lichtleitfaserbündel 20 ist aus Einzellichtfasern 21 aufgebaut. Die Enden der Lichtleitfasern 21 bilden den Lichtleitfaserbündeleingang 22, der in der Detektionsebene 18 liegt. Die einzelnen Enden der Lichtleitfasern 21 stellen somit Pixel dar, mit denen das beugungsbegrenzte Bild 17 des Spots 14 aufgenommen wird. Da der Spot 14 in der Ausführungsform der Fig. 1 exemplarisch ein Punkt-Spot ist, ist das Bild 17 ein Airy-Scheibchen, dessen Ausdehnung innerhalb des Kreises liegt, welcher in den Figuren 1 und 2 die Detektionsebene 18 veranschaulicht. Die Ausdehnung des Lichtleitfaserbündeleingangs 22 ist also so groß, dass damit die Ausdehnung der Airy-Scheibe abgedeckt wird. Die einzelnen Lichtleitfasern 21 im Leichtleitfaserbündel 20 sind an ihren Ausgängen in eine andere geometrische Anordnung gebracht, als am Lichtleitfaserbündeleingang 22, nämlich in Form eines längserstreckten Steckers 23, in dem die ausgangsseitigen Enden der Lichtleitfasern 21 nebeneinander liegen. Der Stecker 23 ist passend zur geometrischen Anordnung der Detektorzeile 24 ausgebildet, d. h. jedes ausgangsseitige Ende einer Lichtleitfaser 21 liegt genau vor einem Pixel 25 der Detektorzeile 24.

Die geometrische Ausdehnung des Umverteilungselementes ist ganz grundsätzlich, d. h. unabhängig von seiner Realisierung, die in Fig. 4 durch ein Faserbündel erfolgt, eingangsseitig an die Ausdehnung des Einzelbildes (bzw. im Falle mehrerer Punkt-Spots der nebeneinanderliegenden Einzelbilder) angepasst. Das Umverteilungselement hat die Funktion, aus der Detektionsebene 18 die Strahlung so aufzunehmen, dass gemessen am Abtasttheorem die Intensitätsverteilung des Einzelbildes 17 bezogen auf die Beugungsgrenze überabgetastet wird, das Umverteilungselement hat also in der Detektionsebene 18 liegende Pixel (in der Bauweise der Fig. 3 durch die Eingangsenden der Lichtleitfasern gebildet), die mindestens um den Faktor 2 kleiner sind als die kleinste auflösbare Struktur, die sich aus der Beugungsgrenze unter Berücksichtigung des Abbildungsmaßstabes in der Detektionsebene 18 ergibt.

Natürlich ist die Verwendung eines Steckers 23 nur eine von vielen Möglichkeiten, die ausgangsseitigen Enden der Lichtleitfasern 21 vor den Pixeln 25 anzuordnen. Gleichermaßen ist es möglich, andere Verbindungen zu verwenden. Auch können die einzelnen Pixel 25 direkt mit den Lichtleitfasern 21 fusioniert werden. Es ist nicht einmal erforderlich, eine Detektorzeile 24 zu verwenden; stattdessen kann für jedes Pixel 25 ein einzelner Detektor verwendet werden.

Die Figuren 3 und 4 zeigen mögliche Ausführungsformen des Lichtleitfaserbündeleingangs 22. Die Lichtleitfasern 21 können am Lichtleitfaserbündeleingang 22 miteinander verschmolzen werden. Hierdurch wird ein höherer Füllfaktor erreicht, d. h. Lücken zwischen den einzelnen Lichtleitfasern 21 am Lichtleitfaserbündeleingang 22 werden minimiert. Das Verschmelzen führ andererseits zu einem gewissen Übersprechen zwischen benachbarten Lichtleitfasern. Möchte man dieses vermeiden, können die Lichtleitfasern geklebt werden. Auch ist eine quadratische Anordnung der Enden der Lichtleitfasern 21 möglich, wie Fig. 4 zeigt.

Bevorzugt sind die einzelnen Lichtleitfasern 21 so den einzelnen Pixeln 25 des Detektorarrays 24 zugeordnet, dass am Lichtleitfaserbündeleingang 22 nebeneinander liegende Lichtleitfasern 21 auch am Detektorarray 24 nebeneinander liegen. Durch dieses Vorgehen minimiert man Übersprechen zwischen benachbarten Pixeln 25, das beispielsweise durch Streustrahlung oder in der Signalverarbeitung der einzelnen Pixel 25 auftreten kann. Ist das Detektorarray 24 eine Zeile, kann man die entsprechende Anordnung dadurch erreichen, indem die Reihenfolge der Einzellichtleitfasern auf der Detektorzeile durch eine Spirale festgelegt wird, welche in Draufsicht auf die Detektionsebene 18 die Einzellichtleitfasern nacheinander verbindet.

Fig. 3 zeigt weiter noch Blindfasern 26, die in den Ecken der Anordnung der Lichtleitfasern 21 am Lichtleitfaserbündeleingang 22 liegen. Diese Blindfasern sind nicht auf Pixel 25 des Detektorarrays geführt. An den Orten der Blindfasern wäre keine für die Auswertung der Signale erforderliche Signalintensität mehr vorhanden. Man kann dadurch die Anzahl der Lichtleitfasern 21 und damit die Anzahl der Pixel 25 in der Detektorzeile 24 oder dem Detektorarray so reduzieren, dass beispielsweise mit 32 Pixeln gearbeitet werden kann. Solche Detektorzeilen 24 sind bereits anderweitig in Laser-Scanning-Mikroskopen im Einsatz, was den Vorteil hat, dass die Signalauswerteelektronik in solchen Laser-Scanning-Mikroskopen nur einmal vorgehalten werden muss und zwischen einer bereits bestehenden Detektorzeile 24 und der durch die Detektoreinrichtung 19 hinzugekommenen weiteren Detektorzeile 24 umgeschaltet wird.

Gemäß Fig. 4 werden Lichtleitfasern mit quadratischer Grundform für das Bündel verwendet. Sie haben ebenfalls einen hohen Abdeckungsgrad in der Detektionsebene, sammeln die Strahlung also effizient auf.

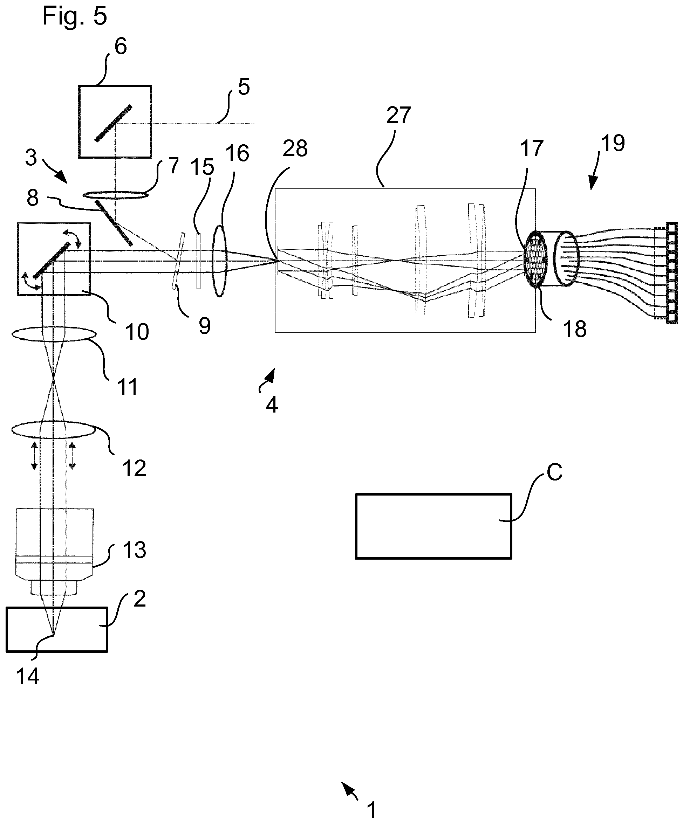

Fig. 5 zeigt eine Weiterbildung des LSM 1 der Fig. 1, in dem der Detektionsebene 18 eine Zoomoptik 27 vorgeordnet ist. Die konjugierte Ebene, in welcher bei der Bauweise der Fig. 1 die Detektionsebene 18 angeordnet wurde, bildet nun eine Zwischenbildebene 28, aus welcher die Zoomoptik 27 die Strahlung aufnimmt und zur Detektionsebene 18 leitet. Die Zoomoptik 27 erlaubt es, das Bild 17 optimal an die Ausdehnung des Eingangs der Detektoreinrichtung 19 anzupassen.

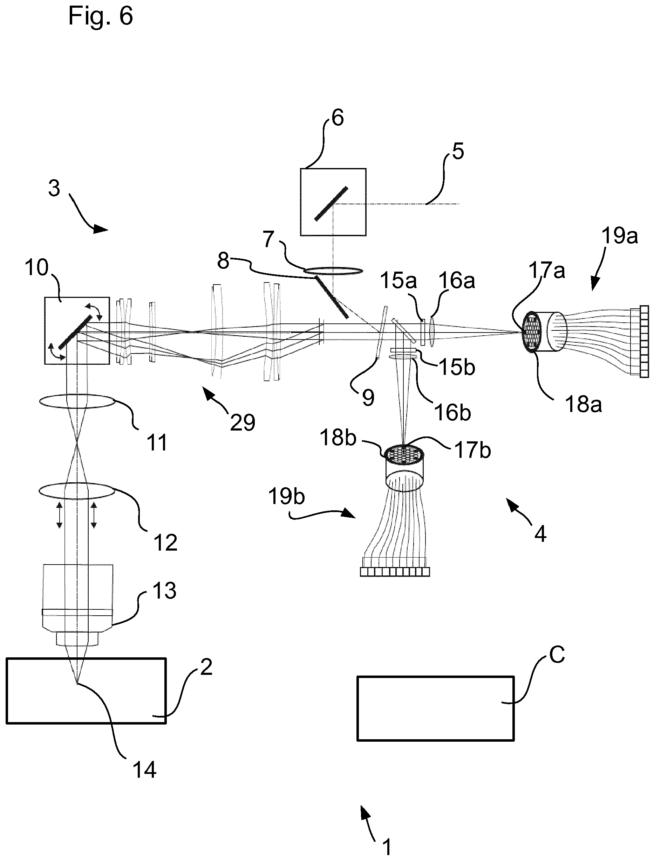

Fig. 6 zeigt eine nochmalige Abwandlung des Laser-Scanning-Mikroskops 1 der Fig. 1. Zum einen ist hier die Zoomoptik als Zoomoptik 29 so angeordnet, dass sie im Teil des Strahlenganges liegt, der sowohl vom Beleuchtungsstrahlengang 3 als auch vom Abbildungsstrahlengang 4 durchlaufen wird. Man erhält damit den Vorteil, dass nicht nur die Größe des Bildes 17 auf der Eingangsseite der Detektoreinrichtung 19 angepasst werden kann, es kann auch bezüglich des Abbildungsstrahlenganges 4 die Pupillenfüllung des Objektivs 13 und damit die Ausnutzung des Laserstrahls 5 angepasst werden.

Zusätzlich ist in Fig. 6 das LSM 1 noch zweikanalig ausgebildet, indem dem Emissionsfilter 9 ein Stahlteiler nachgeordnet ist, welcher die Strahlung in zwei getrennte Farbkanäle abtrennt. Die entsprechenden Elemente der Farbkanäle entsprechen jeweils den Elementen, die im LSM 1 der Fig. 1 dem Emissionsfilter 9 in Abbildungsrichtung nachgeordnet sind. Die Farbkanäle sind in der Darstellung der Fig. 6 durch das Bezugszeichensuffix "a" bzw. "b" unterschieden.

Natürlich ist die Realisierung mit zwei Farbkanälen unabhängig von der Verwendung der Zoomoptik 29. Die Kombination hat jedoch den Vorteil, dass eine Zoomoptik 27, die in beiden Farbkanälen jeweils eigenständig vorgesehen werden müsste und damit doppelt vorhanden wäre, nur einmal erforderlich ist. Selbstverständlich kann jedoch die Zoomoptik 27 auch in der Bauweise gemäß Fig. 1 zum Einsatz kommen und das LSM 1 der Fig. 6 kann auch ohne Zoomoptik 29 verwirklicht werden.

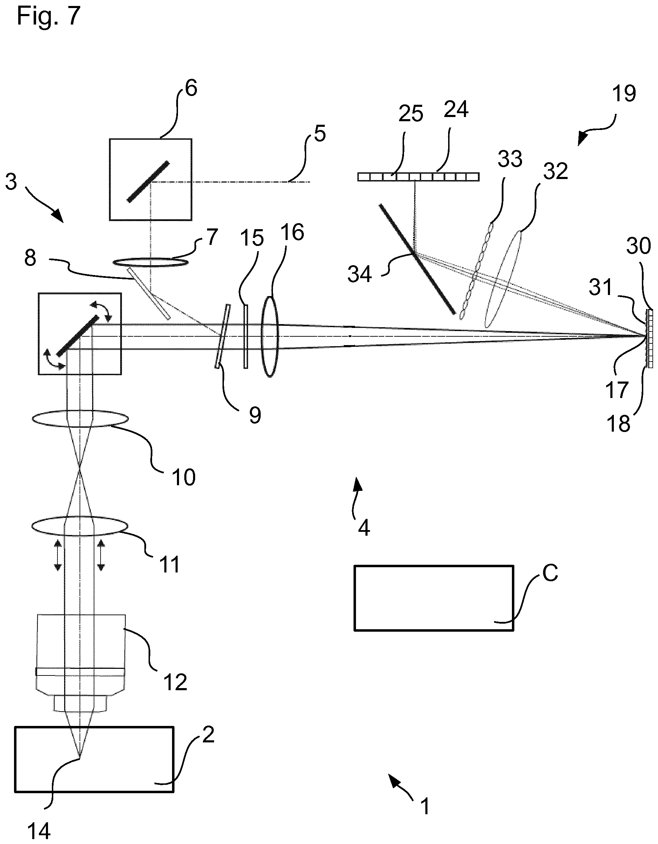

Fig. 7 zeigt eine Abwandlung des LSM 1 der Fig. 1 hinsichtlich der Detektoreinrichtung 19.

Die Detektoreinrichtung 19 weist nun einen Facettenspiegel 30 auf, der einzelne Facetten 31 trägt. Die Facetten 31 entsprechen hinsichtlich der Auflösung des Bildes 17 den Enden der Lichtleitfasern 21 am Lichtleitfaserbündeleingang 22. Die einzelnen Facetten 31 unterscheiden sich hinsichtlich ihrer Neigung zur optischen Achse des Strahlungseinfalls. Zusammen mit einer Linse 32 und einem Minilinsenarray 33 sowie einem nur der Strahlfaltung dienenden Umlenkspiegel 34 bildet jede Facette 31 einen Flächenabschnitt des Einzelbildes 17 auf ein Pixel 25 eines Detektorarrays 24 ab. Je nach Orientierung der Facetten 31 kann das Detektorarray 24 dabei bevorzugt ein 2D-Array sein, aber auch eine Detektorzeile ist möglich.

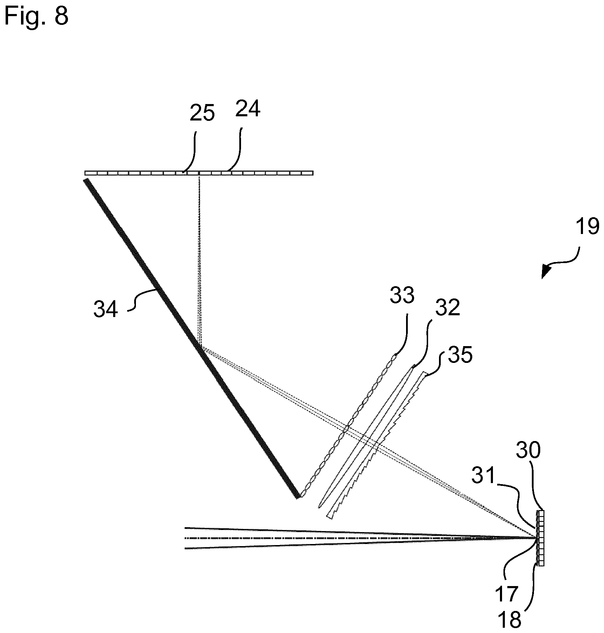

Fig. 8 zeigt eine Weiterbildung der Detektoreinrichtung 19 der Fig. 7, in welcher der Linse 32 noch ein refraktives Element 35 vorgeordnet ist, das die Strahlung besonders gut auf eine Detektorzeile verteilt.

Das Detektorarray 24 kann, wie bereits erwähnt, hinsichtlich seiner Geometrie ohne weitere Einschränkungen gewählt werden. Selbstverständlich muss das Umverteilungselement in der Detektoreinrichtung 19 dann auf das entsprechende Detektorarray angepasst werden. Die einzelnen Pixel, mit denen das Bild 17 aufgelöst wird, sind letztlich hinsichtlich ihrer Größe nicht mehr durch das Detektorarray 24 vorgegeben, sondern durch das Element, welches die Umverteilung der Strahlung aus der Detektionsebene 18 bewirkt. Bei einer Airy-Scheibe ergibt sich der Durchmesser der Scheibe bei einer beugungsbegrenzten Abbildung gemäß der Formel 1,22 · λ/NA, wobei λ die mittlere Wellenlänge der abgebildeten Strahlung und NA die numerische Apertur des Objektivs 13 ist. Die Halbwertsbreite ist dann 0,15 · λ/NA. Um die Hochauflösung zu erreichen, genügt es, die Ortsauflösung bei der Detektion doppelt so groß wie die Halbwertsbreite zu gestalten, d. h. die Halbwertsbreite zweimal abzutasten. Ein Facettenelement 31 bzw. ein Ende einer Lichtleitfaser 21 am Lichtleitfaserbündeleingang 22 darf somit maximal halb so groß wie die Halbwertsbreite des beugungsbegrenzten Einzelbildes sein. Dies gilt natürlich unter Berücksichtigung des Abbildungsmaßstabes, den die Optik nach dem Objektiv 13 bewirkt. Im einfachsten Fall würde also ein 4x4-Array von Pixeln in der Detektionsebene 18 pro Halbwertsbreite mehr als genügen.

Die Zoomoptik, welche anhand der Figuren 5 und 6 erläutert wurde, erlaubt neben einer Anpassung dergestalt, dass die Beugungsverteilung des beugungsbegrenzten Bildes 17 des Spots 14 die Eingangsfläche der Detektoreinrichtung 19 optimal ausfüllt, auch noch eine weitere Betriebsart, wenn nämlich mehr als eine Airy-Scheibe in die Detektionsebene 18 abgebildet wird. Bei einer Messung, bei der mehr als eine Airy-Scheibe auf die Detektoreinrichtung 19 abgebildet wird, wird Licht aus weiteren Tiefenebenen der Probe 2 an den äußeren Pixeln der Detektoreinrichtung 19 detektiert. Im Zuge der Verarbeitung des Bildes erhält man dabei zusätzliche Signalstärke, ohne dass die Tiefenauflösung des LSM 1 beeinträchtigt wäre. Die Zoomoptik 27 bzw. 29 erlaubt es somit, einen Kompromiss zwischen Signal-/Rauschverhältnis des Bildes und Tiefenauflösung einzustellen.

## Patentansprüche

1. Mikroskop zur hochauflösenden Scanning-Mikroskopie einer Probe (2), mit
- einer Beleuchtungseinrichtung (3) zum Beleuchten der Probe (2),
- einer Abbildungseinrichtung (4) zum Scannen mindestens eines Punkt- oder Linien-Spots (14) über die Probe (2) und zum Abbilden des Punkt- oder Linien-Spots (14) in ein beugungsbegrenztes, ruhendes Einzelbild (17) unter einem Abbildungsmaßstab in eine Detektionsebene (18),
- einer Detektoreinrichtung (19) zum Erfassen des Einzelbildes (17) in der Detektionsebene (18) für verschiedene Scanpositionen mit einer Ortauflösung, welche unter Berücksichtigung des Abbildungsmaßstabes mindestens doppelt so groß ist wie eine Halbwertsbreite des beugungsbegrenzten Einzelbildes (17),
- einer Auswerteeinrichtung (C) zum Auswerten einer Beugungsstruktur des Einzelbildes (17) für die Scanpositionen aus Daten der Detektoreinrichtung (19) und zum Erzeugen eines Bildes der Probe (17), das eine Auflösung aufweist, die über die Beugungsgrenze gesteigert ist, wobei
- die Detektoreinrichtung (19) aufweist:
- ein Detektorarray (24), das Pixel (25) aufweist und größer ist als das Einzelbild (17), **dadurch gekennzeichnet, dass** die Detektoreinrichtung weiterhin aufweist:
- ein nicht-abbildendes Umverteilungselement (20-21; 30-34; 30-35), das dem Detektorarray (24) vorgeordnet ist und die Strahlung aus der Detektionsebene (18) nichtabbildend auf die Pixel (25) des Detektorarrays (24) verteilt,
- wobei das Umverteilungselement ein Bündel (20) aus Lichtleitfasern (21) umfasst, welches einen in der Detektionsebene (18) angeordneten Eingang (22) und einen Ausgang (23) aufweist, an dem die Lichtleitfasern (21) in einer geometrischen Anordnung, welche sich von der des Eingangs (22) unterscheidet, an den Pixeln (25) des Detektorarrays (24) enden und
- wobei die Pixel (25) des Detektorarrays (25) größer sind, als für die beugungsbegrenzte Auflösung erforderlich.

2. Mikroskop nach Anspruch 1, **dadurch gekennzeichnet, dass** das Bündel (20) ein Bündel aus Multi-Mode Lichtfasern ist.

3. Mikroskop nach Anspruch 1 oder 2, **dadurch gekennzeichnet, dass** die Lichtleitfasern (21) so vom Eingang (22) zum Ausgang (23) laufen, dass am Ausgang (23) benachbarte Lichtleitfasern (21) auch am Eingang (22) benachbart sind, um ein strahlungsintensitätsabhängiges Übersprechen nebeneinanderliegender Pixel (25) zu minimieren.

4. Mikroskop nach Anspruch 1 oder 2, **dadurch gekennzeichnet, dass** das Umverteilungselement einen Spiegel (30) mit unterschiedlich geneigten Spiegelelementen (31), insbesondere einen Facettenspiegel, ein DMD oder einen adaptiven Spiegel, umfasst, der Strahlung aus der Detektionsebene (18) auf die Pixel (25) des Detektorarrays (24) lenkt, wobei die Pixel (25) des Detektorarrays (25) eine geometrische Anordnung haben, welche sich von der der Spiegelelemente (31) unterscheidet.

5. Mikroskop nach einem der obigen Ansprüche, **dadurch gekennzeichnet, dass** die Abbildungseinrichtung (4) eine der Detektionsebene (18) in Abbildungsrichtung vorgeordnete Zoomoptik (27) zur Anpassung der Größe des Einzelbildes (17) an die der Detektoreinrichtung (19) aufweist.

6. Mikroskop nach Anspruch 5, **dadurch gekennzeichnet, dass** die Beleuchtungseinrichtung (3) und die Abbildungseinrichtung (4) sich eine Scaneinrichtung (10) teilen, so dass die Beleuchtungseinrichtung (3) die Probe (2) mit einem beugungsbegrenzten Punkt- oder Linien-Spot beleuchtet, der mit dem von der Abbildungseinrichtung abgebildeten Spot (14) zusammenfällt, wobei die Zoomoptik (27) so angeordnet ist, dass sie auch Bestandteil der Beleuchtungseinrichtung (3) ist.

7. Mikroskop nach einem der obigen Ansprüche, **dadurch gekennzeichnet, dass** das Detektorarray (24) eine Detektorzeile, bevorzugt eine APD- oder PMT-Zeile ist.

8. Verfahren zur hochauflösenden Scanning-Mikroskopie einer Probe (2), bei dem
- die Probe (2) beleuchtet wird,
- mindestens ein scannend über die Probe (2) geführter Punkt- oder Linien-Spot (14) in ein Einzelbild (17) abgebildet wird, wobei der Spot (14) unter einem Abbildungsmaßstab beugungsbegrenzt in das Einzelbild (17) abgebildet wird und das Einzelbild (17) ruhend in einer Detektionsebene (18) liegt,
- für verschiedene Scanpositionen das Einzelbild (17) mit einer Ortauflösung erfasst wird, welche unter Berücksichtigung des Abbildungsmaßstabes mindestens doppelt so groß ist wie eine Halbwertsbreite des beugungsbegrenzten Einzelbildes (17), so dass eine Beugungsstruktur des Einzelbildes (17) erfasst wird,
- für jede Scanposition die Beugungsstruktur des Einzelbildes (17) ausgewertet wird und ein Bild der Probe (2) erzeugt wird, das eine Auflösung aufweist, die über die Beugungsgrenze gesteigert ist, wobei
- ein Detektorarray (24) bereitgestellt wird, das Pixel (25) aufweist und größer ist als das Einzelbild (17), **dadurch gekennzeichnet, dass**
- Strahlung des Einzelbildes aus der Detektionsebene (18) nicht-abbildend auf die Pixel (25) des Detektorarrays (24) umverteilt wird,
- wobei die Strahlung des Einzelbildes (17) mittels eines Bündels (20) aus Lichtleitfasern (21) umverteilt wird, welches einen in der Detektionsebene (18) angeordneten Eingang (22) und einen Ausgang (23) aufweist, an dem die Lichtleitfasern (21) in einer geometrischen Anordnung, welche sich von der des Eingangs (22) unterscheidet, an den Pixeln (25) des Detektorarrays (24) enden, und
- wobei die Pixel (25) des Detektorarrays (25) größer sind, als für die beugungsbegrenzte Auflösung erforderlich.

9. Verfahren nach Anspruch 8, **dadurch gekennzeichnet, dass** das Bündeln (2) ein Bündel (20) aus Multi-Mode Lichtleitfasern ist.

10. Verfahren nach Anspruch 8 oder 9, **dadurch gekennzeichnet, dass** die Lichtleitfasern (21) so vom Eingang (22) zum Ausgang (23) geführt werden, dass am Ausgang (23) benachbarte Lichtleitfasern (21) auch am Eingang (22) benachbart sind, um ein strahlungsintensitätsabhängiges Übersprechen nebeneinanderliegender Pixel (25) zu minimieren.

11. Verfahren nach Anspruch 8 oder 9, **dadurch gekennzeichnet, dass** das Bündel (20) aus Lichtleitfasern (21) und das Detektorarray (24) kalibriert werden, indem jede Lichtleitfaser (21) einzeln mit Strahlung beaufschlagt wird, Störsignal in Pixeln (25), die am Ausgang (23) benachbarten Lichtleitfasern (21) zugeordnet sind, erfasst werden und eine Kalibriermatrix aufgestellt wird, mit der bei Mikroskopie der Probe (2) ein strahlungsintensitätsabhängiges Übersprechen nebeneinanderliegender Pixel (25) korrigiert wird.

12. Verfahren nach Anspruch 8 oder 9, **dadurch gekennzeichnet, dass** die Strahlung des Einzelbildes (17) mittels eines Spiegels (30) mit unterschiedlich geneigten Spiegelelementen (31), insbesondere einen Facettenspiegel, ein DMD oder einen adaptiven Spiegel, umverteilt wird, wobei durch den Spiegel (30) die Strahlung aus der Detektionsebene (18) auf die Pixel (25) des Detektorarrays (24) geleitet wird und die Pixel (25) des Detektorarrays (24) eine geometrische Anordnung haben, welche sich von der der Spiegelelemente (31) unterscheidet.

13. Verfahren nach einem der obigen Verfahrensansprüche, **dadurch gekennzeichnet, dass** als Detektorarray (24) eine Detektorzeile, bevorzugt eine APD- oder PMT-Zeile verwendet wird.

14. Verfahren nach einem der obigen Verfahrensansprüche, **dadurch gekennzeichnet, dass** eine Bewegungsrichtung des Scannens des Punkt- oder Linien-Spots (14) ermittelt wird, indem Signale einzelner Pixel (25) des Detektorarrays (24) mittels Kreuzkorrelation ausgewertet werden.

15. Verfahren nach einem der obigen Verfahrensansprüche, **dadurch gekennzeichnet, dass** Veränderungen in der Probe (2) erfasst werden, indem bei in der Probe (2) ruhendem Punkt- oder Linien-Spot (14) eine zeitliche Veränderung des beugungsbegrenzten Einzelbildes (17) ermittelt und ausgewertet wird.

## Claims

1. Microscope for high-resolution scanning microscopy of a specimen (2), having
- an illumination device (3) for illuminating the specimen (2),
- an imaging device (4) for scanning at least one point or line spot (14) over the specimen (2) for imaging the point or line spot (14) in a diffraction-limited, stationary individual image (17) into a detection plane (18) at an imaging scale,
- a detector device (19) for capturing the individual image (17) in the detection plane (18) for different scanning positions with a spatial resolution that, taking account of the imaging scale, is at least twice as large as a full width at half maximum of the diffraction-limited individual image (17),
- an evaluation device (C) for evaluating a diffraction structure of the individual image (17) for the scanning positions from the data of the detector device (19) and for producing an image of the specimen (17), said image having a resolution that is increased beyond the diffraction limit, wherein
- the detector device (19) has:
- a detector array (24) that has pixels (25) and that is larger than the individual image (17), **characterized in that**
the detector device furthermore has:
- a non-imaging redistribution element (20-21; 30-34; 30-35) that is disposed upstream of the detector array (24) and that distributes the radiation from the detection plane (18) in a non-imaging fashion onto the pixels (25) of the detector array (24),
- wherein the redistribution element comprises a bundle (20) of optical fibres (21), said bundle having an entrance (22) arranged in the detection plane (18) and an exit (23) at which the optical fibres (21) end at the pixels (25) of the detector array (24) in a geometric arrangement that differs from that of the entrance (22), and
- wherein the pixels (25) of the detector array (25) are larger than what is necessary for the diffraction-limited resolution.

2. Microscope according to Claim 1, **characterized in that** the bundle (20) is a bundle of multimode optical fibres.

3. Microscope according to Claim 1 or 2, **characterized in that** the optical fibres (21) run from the entrance (22) to the exit (23) in such a way that optical fibres (21) that are adjacent at the exit (23) are also adjacent at the entrance (22) in order to minimize a radiation-intensity-dependent crosstalk of adjacent pixels (25).

4. Microscope according to Claim 1 or 2, **characterized in that** the redistribution element comprises a mirror (30) with differently tilted mirror elements (31), in particular a facet mirror, a DMD or an adaptive mirror, said mirror steering radiation from the detection plane (18) onto the pixels (25) of the detector array (24), wherein the pixels (25) of the detector array (25) have a geometric arrangement that differs from that of the mirror elements (31).

5. Microscope according to any one of the preceding claims, **characterized in that** the imaging device (4) has a zoom optical unit (27) disposed upstream of the detection plane (18) in the imaging direction, for the purposes of adapting the size of the individual image (17) to that of the detector device (19).

6. Microscope according to Claim 5, **characterized in that** the illumination device (3) and the imaging device (4) share a scanning device (10) such that the illumination device (3) illuminates the specimen (2) with a diffraction-limited point or line spot that coincides with the spot (14) imaged by the imaging device, wherein the zoom optical unit (27) is arranged in such a way that it is also constituent part of the illumination device (3).

7. Microscope according to any one of the preceding claims, **characterized in that** the detector array (24) is a detector line, preferably an APD or PMT line.

8. Method for high-resolution scanning microscopy of a specimen (2), wherein
- the specimen (2) is illuminated,
- at least one point or line spot (14) that is guided over the specimen (2) in a scanning manner is imaged into an individual image (17), wherein the spot (14) is imaged into the individual image (17) at an imaging scale in a diffraction-limited manner and the individual image (17) lies at rest in a detection plane (18),
- the individual image (17) is captured for various scanning positions with a spatial resolution that, taking account of the imaging scale, is at least twice as large as a full width at half maximum of the diffraction-limited individual image (17) such that a diffraction structure of the individual image (17) is captured,
- the diffraction structure of the individual image (17) is evaluated for each scanning position and an image of the specimen (2) is produced, said image having a resolution that is increased beyond the diffraction limit, wherein
- a detector array (24) is provided, said detector array having pixels (25) and being larger than the individual image (17), **characterized in that**
- radiation of the individual image is redistributed from the detection plane (18) onto the pixels (25) of the detector array (24) in a non-imaging fashion,
- wherein the radiation of the individual image (17) is redistributed by means of a bundle (20) of optical fibres (21), said bundle having an entrance (22) arranged in the detection plane (18) and an exit (23) at which the optical fibres (21) end at the pixels (25) of the detector array (24) in a geometric arrangement that differs from that of the entrance (22), and
- wherein the pixels (25) of the detector array (25) are larger than what is necessary for the diffraction-limited resolution.

9. Method according to Claim 8, **characterized in that** the bundle (2) is a bundle (20) of multimode optical fibres.

10. Method according to Claim 8 or 9, **characterized in that** the optical fibres (21) are led from the entrance (22) to the exit (23) in such a way that optical fibres (21) that are adjacent at the exit (23) are also adjacent at the entrance (22) in order to minimize a radiation-intensity-dependent crosstalk of adjacent pixels (25).

11. Method according to Claim 8 or 9, **characterized in that** the bundle (20) of optical fibres (21) and the detector array (24) are calibrated by virtue of each optical fibre (21) being impinged individually with radiation, disturbance signals in pixels (25) that are assigned to adjacent optical fibres (21) at the exit (23) being captured and a calibration matrix being established, said calibration matrix being used to correct a radiation-intensity-dependent crosstalk of adjacent pixels (25) during microscopy of the specimen (2).

12. Method according to Claim 8 or 9, **characterized in that** the radiation of the individual image (17) is redistributed by means of a mirror (30) with differently tilted mirror elements (31), in particular a facet mirror, a DMD or an adaptive mirror, wherein the radiation is guided from the detection plane (18) to the pixels (25) of the detector array (24) by way of the mirror (30) and the pixels (25) of the detector array (24) have a geometric arrangement that differs from that of the mirror elements (31).

13. Method according to any one of the preceding method claims, **characterized in that** a detector line, preferably an APD or PMT line, is used as a detector array (24).

14. Method according to any one of the preceding method claims, **characterized in that** a movement direction of scanning the point or line spot (14) is ascertained by virtue of evaluating signals of individual pixels (25) of the detector array (24) by means of cross-correlation.

15. Method according to any one of the preceding method claims, **characterized in that** changes in the specimen (2) are captured by virtue of a change over time of the diffraction-limited individual image (17) being ascertained and evaluated when the point or line spot (14) rests in the specimen (2).

## Revendications

1. Microscope destiné à la microscopie par balayage à haute résolution d'un échantillon (2), avec :
- un dispositif d'éclairage (3) destiné à l'éclairage de l'échantillon (2) ;
- un dispositif de représentation (4) destiné au balayage d'au moins un point ponctuel ou d'un point linéaire (14) sur l'échantillon (2) et destiné à la représentation du point ponctuel ou du point linéaire (14) dans une image à diffraction limitée et au repos (17), à une échelle de représentation dans un plan de détection (18) ;
- un dispositif de détection (19) destiné à la capture de l'image (17) dans le plan de détection (18) pour des positions de balayage différentes, avec une résolution locale qui est au moins deux fois plus grande, compte tenu de l'échelle de représentation, qu'une largeur à mi-hauteur de l'image à diffraction limitée (17) ;
- un mécanisme d'évaluation (C) destiné à l'évaluation d'une structure de diffraction de l'image (17) pour les positions de balayage à partir des données du dispositif de détection (19) et destiné à la génération d'une image de l'échantillon (17) qui présente une résolution supérieure à la limite de diffraction ;
selon lequel le dispositif de détection (19) présente :
- un groupe de détecteurs (24) qui présente des pixels (25) et qui est supérieur à l'image (17) ;
**caractérisé en ce que**
le dispositif de détection présente en outre :
- un élément de répartition sans représentation (20 à 21 ; 30 à 34 ; 30 à 35) qui est installé en amont du groupe de détecteurs (24) et qui répartit, d'une manière dépourvue de représentation, le rayonnement provenant du plan de détection (18) sur les pixels (25) du groupe de détecteurs (24) ;
- l'élément de répartition comprenant un faisceau (20) de fibres optiques (21), lequel présente une entrée (22) disposée dans le plan de détection (18) et une sortie (23) par laquelle les fibres optiques (21) se terminent dans une disposition géométrique au niveau des pixels (25) du groupe de détecteurs (24), laquelle disposition géométrique se distingue de celle de l'entrée (22) ; et
- les pixels (25) du groupe de détecteurs (25) étant plus gros que ce qui est nécessaire pour la résolution à diffraction limitée.

2. Microscope selon la revendication 1, **caractérisé en ce que** le faisceau (20) est un faisceau constitué de fibres optiques multimode.

3. Microscope selon la revendication 1 ou 2, **caractérisé en ce que** les fibres optiques (21) s'étendent depuis l'entrée (22) jusqu'à la sortie (23), de telle sorte que les fibres optiques (21) qui se trouvent à proximité de la sortie (23) sont également situées à proximité de l'entrée (22), en vue de réduire le plus possible toute interférence des pixels situés côte à côte (25) qui dépendrait de l'intensité du rayonnement.

4. Microscope selon la revendication 1 ou 2, **caractérisé en ce que** l'élément de répartition comprend un miroir (30) lequel présente des éléments de miroir (31) inclinés de différentes manières, en particulier un miroir à facettes, une matrice de micro-miroirs (DMD) ou un miroir adaptatif, lequel miroir oriente le rayonnement provenant du plan de détection (18) sur les pixels (25) du groupe de détecteurs (24) les pixels (25) du groupe de détecteurs (25) ayant une disposition géométrique qui se distingue de celle des éléments de miroir (31).

5. Microscope selon l'une des revendications ci-dessus, **caractérisé en ce que** le dispositif de représentation (4) présente une optique de zoom (27) installée en amont du plan de détection (18) dans la direction de la représentation, en vue de l'adaptation de la taille de l'image (17) à celle du dispositif de détection (19).

6. Microscope selon la revendication 5, **caractérisé en ce que** le dispositif d'éclairage (3) et le dispositif de représentation (4) se partagent un mécanisme de balayage (10), de telle sorte que le dispositif d'éclairage (3) éclaire l'échantillon (2) avec un point ponctuel ou un point linéaire à diffraction limitée qui coïncide avec le point (14) représenté par le dispositif de représentation l'optique de zoom (27) étant disposée de telle sorte qu'elle forme une partie constitutive du dispositif d'éclairage (3).

7. Microscope selon l'une des revendications ci-dessus, **caractérisé en ce que** le groupe de détecteurs (24) est une rangée de détecteurs, de préférence une rangée de photodiodes à avalanche (APD) ou une rangée de tubes photomultiplicateurs (PMT).

8. Procédé destiné à la microscopie par balayage à haute résolution d'un l'échantillon (2), pour lequel :
- l'échantillon (2) est éclairé ;
- au moins un point ponctuel ou un point linéaire (14), lequel est dirigé par balayage sur l'échantillon (2), est représenté dans une image (17) le point (14) étant représenté dans l'image (17) à une échelle de représentation à diffraction limitée et l'image (17) se trouvant au repos, dans un plan de détection (18) ;
- l'image (17) est capturée avec une résolution locale pour différentes positions de balayage, laquelle résolution locale est au moins deux fois plus grande, compte tenu de l'échelle de représentation, qu'une largeur à mi-hauteur de l'image à diffraction limitée (17), de telle sorte qu'une structure de diffraction de l'image (17) est capturée ;
- la structure de diffraction de l'image (17) est évaluée pour chaque position de balayage et une image de l'échantillon (2) est générée, laquelle présente une résolution qui est supérieure à la limite de diffraction ;
- un groupe de détecteurs (24) étant mis à disposition, lequel présente des pixels (25) et lequel est supérieur à l'image (17) ;
**caractérisé en ce que**
- le rayonnement de l'image provenant du plan de détection (18) est réparti sur les pixels (25) du groupe de détecteurs (24), d'une manière dépourvue de représentation, ;
- le rayonnement de l'image (17) étant réparti au moyen d'un faisceau (20) de fibres optiques (21), lequel présente une entrée (22) disposée dans le plan de détection (18) et une sortie (23) par laquelle les fibres optiques (21) se terminent dans une disposition géométrique au niveau des pixels (25) du groupe de détecteurs (24), laquelle disposition géométrique se distingue de celle de l'entrée (22) ; et
- les pixels (25) du groupe de détecteurs (25) étant plus gros que ce qui est nécessaire pour la résolution à diffraction limitée.

9. Procédé selon la revendication 8, **caractérisé en ce que** le faisceau (2) est un faisceau constitué de fibres optiques multimode.

10. Procédé selon la revendication 8 ou 9, **caractérisé en ce que** les fibres optiques (21) sont guidées de l'entrée (22) jusqu'à la sortie (23) de telle sorte que les fibres optiques (21) qui se trouvent à proximité de la sortie (23) sont également situées à proximité de l'entrée (22), en vue de réduire le plus possible toute interférence des pixels situés côte à côte (25) qui dépendrait de l'intensité du rayonnement.

11. Procédé selon la revendication 8 ou 9, **caractérisé en ce que** le faisceau (20) constitué de fibres optiques (21) et le groupe de détecteurs (24) sont étalonnés en soumettant de manière individuelle chaque fibre optique (21) à un rayonnement, des signaux parasites sont saisis dans des pixels (25) qui sont associés à des fibres optiques (21) qui se trouvent à proximité de la sortie (23) et une matrice de calibrage est mise en place, au moyen de laquelle toute interférence des pixels (25) situés côte à côte, qui dépendrait de l'intensité du rayonnement, est corrigée lors de la microscopie de l'échantillon (2).

12. Procédé selon la revendication 8 ou 9, **caractérisé en ce que** le rayonnement de l'image (17) est réparti au moyen d'un miroir (30), lequel présente des éléments de miroir (31) inclinés de différentes manières, en particulier d'un miroir à facettes, d'une matrice de micro-miroirs (DMD) ou d'un miroir adaptatif, le rayonnement provenant du plan de détection (18) étant dirigé par le miroir (30) sur les pixels (25) du groupe de détecteurs (24) et les pixels (25) du groupe de détecteurs (24) ayant une disposition géométrique qui se distingue de celle des éléments de miroir (31).

13. Procédé selon l'une des revendications de brevet ci-dessus, **caractérisé en ce qu'**une rangée de détecteurs, de préférence une rangée de photodiodes à avalanche (APD) ou une rangée de tubes photomultiplicateurs (PMT) est utilisée pour servir de groupe de détecteurs (24).

14. Procédé selon l'une des revendications de brevet ci-dessus, **caractérisé en ce qu'**une direction de déplacement du balayage du point ponctuel ou du point linéaire (14) est calculée en évaluant des signaux de pixels (25) individuels du groupe de détecteurs (24) au moyen d'une corrélation croisée.

15. Procédé selon l'une des revendications de brevet ci-dessus, **caractérisé en ce que** des modifications sont déterminées dans l'échantillon (2) en calculant et en évaluant une modification dans le temps de l'image (17) à diffraction limitée, quand un point ponctuel ou un point linéaire (14) se trouve au repos dans l'échantillon (2).
